# EUROPEAN PATENT APPLICATION

(11) **EP 3 279 753 A1**
(43) Date of publication of application: **07.02.2018**
(21) Application number: 16182191.3
(22) Date of filing: 01.08.2016
(51) Int. Cl.: G05B 19/042

(54) **ACTUATOR MODULE FOR MULTI-TENANT SYSTEMS AND METHOD FOR CONTROLLING AN ACTUATOR**

(71) Applicant: Siemens Aktiengesellschaft, 80333 München (DE)
(72) Inventor: Frank, Reinhard, 81369 München (DE); Zeiger, Florian, 85635 Höhenkirchen-Siegertsbrunn (DE)

(57) **Abstract**

The present invention relates generally to actuator control techniques and, more particularly, to multi-tenant user actu-ator access systems and methods.

In accordance with one aspect of the present invention there is provided an actuator module (MTM) comprising a connectivity module (CM), a processor (MTP) and an actuator interface (I). The connectivity module comprises a first tenant connector (I_{T1}) configured to receive a first set of commands (C_{T1}) from a first tenant (T1) and provide said first set of commands to the processor and further comprises at least one second tenant connector (I_{T2}) configured to receive a at least one second set of commands (C_{T2}) from at least one second tenant (T2) and provide said second set of commands to the processor. The processor is configured to receive the first set of commands and to receive the at least one second set of commands, and to generate a set of output commands (C) from the first and second sets of commands in accordance with a command mapping, and to provide said set of output commands to at least one actuator via the actuator interface (I).

## Description

### TECHNICAL FIELD

The present invention relates generally to actuator control techniques and, more particularly, to multi-tenant user actuator access systems and methods.

### BACKGROUND

Actuators are used in many modern machines, manufacturing plants, and more generally in industrial environments to directly or indirectly influence physical phenomena, such as temperature, speed, and fluid flow constituents. Actuators are usually controlled by at least one controller which in turn receives or has preprogrammed data and instructions upon which actuator control is based.

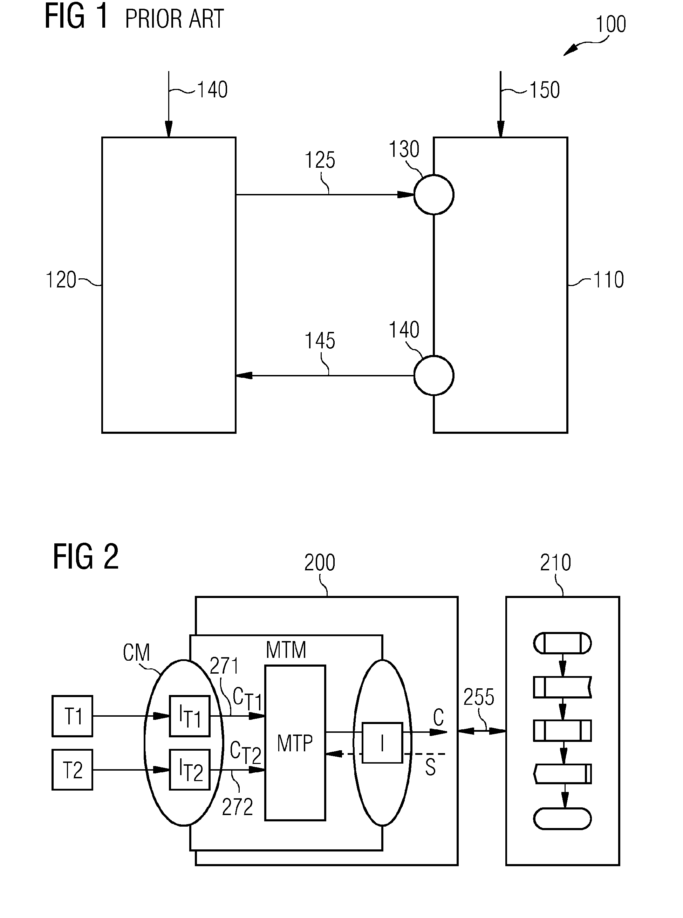

Advanced industrial control systems provide resources to establish communication services between sensors, actuators, controllers, and applications. As diagrammatically illustrated in Fig. 1, industrial control systems 100 comprise at least one sensor 140, at least one actuator 130, a controller 120 and physical or logical connections 125, 145 for transmitting control commands from the controller 120 to the actuator 130 and for transmitting sensor data to the controller in order to influence and control a process or machine or fabric 100. Controller 120 receives input data 140, for example a setpoint or other data indicating a target setting of process/machine/fabric 100. Disturbances and other environmental influences 150 have an impact on process/machine/fabric 100.

Recently, the concept of multi-tenancy has been proposed for the industry domain. Multi-tenancy requires that each tenant (or customer) can make use of its assigned resources without being interfered by another tenant and vice versa. Tenants need to share resources such as communication links, network equipment such as gateways, routers, firewalls or switches, as well as access to end devices such as sensors 140 and actuators 130. Each tenant may require an individual view of the resources in the system 100, tailored to the particular needs and tasks of that tenant. In some configurations, more than one tenant may need to influence the process/machine/fabric 100 by exercising control over a given actuator 130.

Simultaneous access to a given actuator 130 by multiple tenants is a presently unsolved problem. Tenants may have different roles (in terms of priority, access, privileges). Different tenants may have different access levels, command execution rights, and importance on the safe operation of the underlying industrial process which must be ensured at all times regardless of tenants' input. Known AAA techniques are useful for controlling access but they cannot be used to completely separate actions of different tenants relating the same actuator.

The publication "Multi-Tenancy in Decentralised IoT" by Sylvain Cherrier, Zahra Movahedi, and Yacine M. Ghamri-Doudane (2015 IEEE 2nd World Forum on Internet of Things (WF-IoT), pages 256-261, 14-16 DEC 2015) addresses actuator access in multi-tenancy IoT environments that are not feasible in the industry domain for reasons of high computational requirements, lack of real-time capability and lack of design for reliability. In more detail, above-identified publication deals with typical challenges such as "How to handle multiple control flows on objects?", "How to define access and rights of each user over the device?", and ""How to handle conflicts, particularly concerning actuator usage, in case of contradicting commands?". A solution is presented for IoT platforms where users can give access to their objects (=sensors/actuators) to other users. It also provides an abstracted representation of sensors and actuators, e.g. in human readable form ("door is closed"). This solution fully relies on protocols from the IoT domain and does not support industry related control network protocols or access to device registers. A fundamental principle of this known multi-tenancy actuator access technique is that it creates an abstraction of a sensor by inserting user specific abstraction layers inside the transducers in order to simplify the sensor/actuator behavior and insert a "security layer" for access control and providing command prioritization to be defined by users for their IoT objects. This layering, together with the required transducer analyzer and combined evaluation of sensor data and actuator commands changes the representation of the actuator towards the controller and requires large amounts of processing power as each command or sensor data packet has to pass through all these layers. Fulfilling these processing requirements in real-time can only be accomplished with high compute capacities which are not available in or close to industry-domain field devices.

Also, the publication focuses on setting up a multi-user system for managing access control of IoT objects which addresses some but not all of the problems of a true multi-tenant industrial environment, one key difference being that in industrial networks tenants require access to the control network or the controller and in some cases to the actual actuator.

It is therefore an object of the present invention to provide a real-time capable, control protocol independent actuator module and a corresponding method for controlling an actuator.

### SUMMARY

In accordance with one aspect of the present invention there is provided an actuator module comprising a connectivity module, a processor and an actuator interface. The connectivity module comprises a first tenant connector configured to receive a first set of commands from a first tenant and provide said first set of commands to the processor and further comprises at least one second tenant connector configured to receive a at least one second set of commands from at least one second tenant and provide said second set of commands to the processor. The processor is configured to receive the first set of commands and to receive the at least one second set of commands, and to generate a set of output commands from the first and second sets of commands in accordance with a command mapping, and to provide said set of output commands to at least one actuator via the actuator interface.

In a preferred embodiment, the processor is configured to preprocess the command mapping to provide one set of output commands for each combination of valid first and second sets of commands based on first and second tenant priority values.

In accordance with another aspect of the present invention there is provided a system comprising at least one first such actuator module and at least one second such actuator module.

In accordance with another aspect of the present invention there is provided a control system comprising at least one such actuator module and at least one tenant control application configured to receive sensor values, generate a first set of control commands based on the sensor values, and provide the first set of control commands to the at least one actuator module.

In accordance with yet another aspect of the present invention there is provided a method for generating a set of output commands, comprising the steps of generating a command mapping which maps each combination of valid first and second sets of commands to one set of output commands based on first and second tenant priority values; receiving a first set of commands and at least one second least one second set of commands; generating a set of output commands from the first and second sets of commands in accordance with the command mapping; and providing said set of output commands to at least one actuator via an actuator interface.

Embodiments of the present invention advantageously employ actuators that provide state information. Such state information may be propagated towards the tenant and/or be used in the process of generating the output command set.

The present invention, by employing a command mapping which may be static or be defined by an administrator or be created automatically based on input provided from tenants during an initialization phase, advantageously allows connectivity of multiple tenants to an actuator while preventing actions of different tenants affecting each other and by allowing defined actions in the case of conflicting access from multiple tenants to an actuator. Such mapping mechanism allows the design of a multi-tenant actuator module to consume minimal processing capacity so that real-time processing is supported even in environments where only very limited computing resources are available. The actuator module can be located anywhere in a system, for example as part of the actual actuator or at any network device. It can also be implemented in distributed fashion and/or in the form of software.

### BRIEF DESCRIPTION OF THE DRAWINGS

- Fig. 1: is a diagrammatic illustration of an industrial control system;
- Fig. 2: is a diagrammatic illustration of an exemplary actuator module;
- Fig. 3: is a block diagram of an exemplary output command generating method; and
- Fig. 4: is a diagrammatic illustration of an exemplary system wherein multiple tenants access multiple actuators via multiple actuator modules.

### DETAILED DESCRIPTION

As explained above, Fig. 1 shows an industrial control system 100 which comprises at least one sensor 140, at least one actuator 130, a controller 120 and physical or logical connections 125, 145 for transmitting control commands from the controller 120 to the actuator 130 and for transmitting sensor data to the controller in order to influence and control a process or machine or fabric 100. Controller 120 receives input data 140, for example a setpoint or other data indicating a target setting of process/machine/fabric 100. Disturbances and other environmental influences 150 have an impact on process/machine/fabric 100.

In accordance with principal embodiments of the invention, access to the actuator 130 will be limited to an administrative function of the industrial network. Tenants will not be given direct access to the actuator and its configuration. Instead an actuator module MTM as shown in Fig. 2 is employed for processing tenants' actuator commands and providing a resulting output command to the actuator.

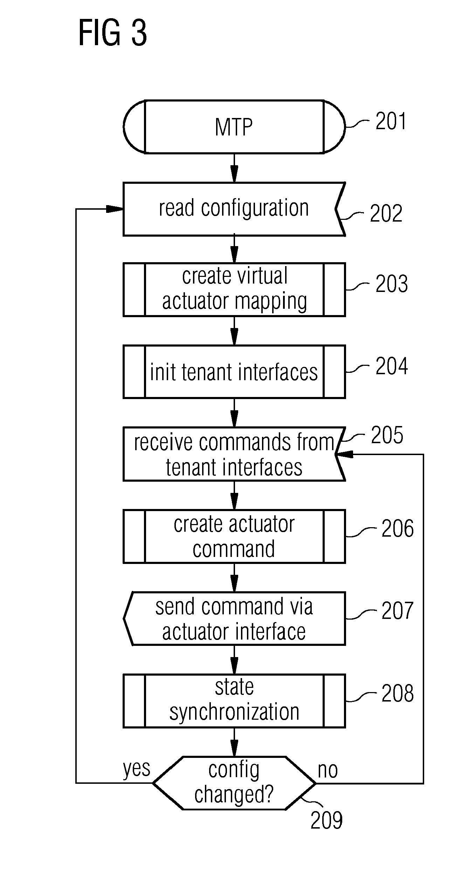

In the exemplary embodiment of Fig. 2, two tenant environments T1 and T2 are connected to a multi-tenant processing element MTP via tenant interfaces I_{T1} and I_{T2} of a communication module CM of multi-tenant actuator module MTM. At the multi-tenant processing element, or processor, MTP tenant specific command sets c_{T1}, c_{T2} are received via links 271, 272. Links 271, 272 may either be logical or physical links or more generally any means for communicating information. The processor MTP creates output command sets C for the actuator (not shown) and sends them via interface I towards the actuator which then influences process 210 accordingly. Turning now to Fig. 3 there is shown in a block diagram an exemplary output command generating method as could be executed by multi-tenant processing element MTP. In a first step 201 the processing element is initialized. Initialization may comprise any or all of the following steps: loading a corresponding executable into a processor memory for execution of the steps as described in the following; initializing basic variables and registers; allocating resources such as volatile memory, access to I/O modules, and in multiprocessing environments computing resources or processor time; running diagnostics; instantiating an existing module or process to create a new multi-tenant actuator module MTM for operation separately from other instances of the module or process.

In a following step 202 the system configuration is acquired. Preferably this step is only executed at start-up or after configuration changes. In a preferred embodiment the configuration may comprise tables which represent tenant specific mappings and other information as will be explained in the following.

A first table, Table 1, has an interface mapping which maps tenant environments and tenant interfaces to tenant IDs. Tenant interfaces may for example be physical or virtual network interfaces.

**Table 1: Interface Mapping**

| Interface mapping | |
|---|---|
| **Tenant ID** | **Interface** |
| T1 | I_{T1} |
| T2 | I_{T2} |
| T3 | <not present> |

As per the example shown in Table 1, interface I_{T1} is associated with tenant T1 and interface I_{T2} is associated with tenant T2. There is no interface associated with / available for tenant T3.

A second (set of) table(s) lists all admissible tenant commands. There may be provided one such table for each tenant. Of course those with skills in the art will readily appreciate that instead of having on table for each tenant there could also be a larger table comprising the admissible tenant commands for all tenants. Table 2-1 shows the admissible commands this for tenant T1 and Table 2-2 for tenant T2. Some commands may require parameters. In embodiments of the invention Tables 2 may thus comprise parameter restrictions such as ranges or parameter type.

**Table 2-1: Tenant Commands for tenant T1**

| Tenant commands: T1 | |
|---|---|
| **Command ID** | **Parameter restrictions** |
| CR01 | Allowed values: 0; 1 |
| CR02 | Allowed range: -10 .. +10 |
| CR05 | <none> |
| CR06 | <none> |
| CR10 | <none> |

As per the example shown in Table 2-1, command CR01 is only considered to be valid if its parameter is present and has a value of either 0 or 1. Command CR02 is only considered to be valid if its parameter is present and if its value is within the range of -10 .. +10. The only other admissible commands for tenant T1 are CR05, CR06 and CR10 which can have any or no parameter value. Other commands such as CR03, CR04 are not available for tenant T1 and will be ignored and/or met with an error message if received. It should be noted that in some applications of the present invention all available commands have the effect that a specific register in the actuator is set to the parameter specified in the command. Thus in some implementations the terms command and register may be used interchangeably.

**Table 2-2: Tenant Commands for tenant T2**

| Tenant commands: T2 | |
|---|---|
| **Command ID** | **Parameter restrictions** |
| CR01 | Allowed values: 0; 1 |
| CR02 | <none> |
| CR05 | <none> |

In a third table, Table 3, tenant priorities are assigned. Tenant priorities are used to give specific tenants' commands priority over other tenants' commands. For example a command received from a tenant having high impact on the underlying process will be executed and all other tenants' commands will be ignored. In another example, control commands from SCADA or safety related commands are assigned a high priority whereas commands relating to maintenance procedures are delayed or discarded.

**Table 3: Tenant Priority**

| Tenant priority | |
|---|---|
| **Command ID** | **Priority assignment** |
| CR01 | T1 |
| CR02 | <none> |
| CR05 | T2 |
| CR06 | ADMIN |
| CR10 | ADMIN, T1 |

As shown for command CR02 in Table 3, actuator commands or registers can be assigned with no priority meaning that commands will be executed on a first come first served basis.

As shown for commands CR01 and CR05 in Table 3, some tenant's commands may be given sole priority over any other tenant's commands in that this tenant's commands overwrites commands from any other tenant. A special case is shown for CR06 where the administrator has priority over any tenant. In other implementations the administrator will always have priority over any tenant without such priority being part of the tenant priority assignment mechanism.

Finally, as shown for command CR10 in Table 3, multiple tenants or users may have priority over the other tenants or users. The sequence in which the entries are provided may in embodiments indicate that ADMIN has priority over tenant T2. In other embodiments the sequence may have no impact on the priority assignment so that commands of ADMIN and T2 are executed in the order of their reception.

In a forth table, Table 4, there may be provided general configuration data.

**Table 4: General MTM Configuration**

| General configuration | |
|---|---|
| **Parameter** | **Value** |
| MTM identifier | <value> |
| Actuator interface | <values> |
| Protocol connector | <values> |
| .. | |

In step 203, a virtual actuator mapping is created based on the configuration information explained in detail above. In a preferred embodiment, in step 203 there is compiled a single mapping structure based on all tenant commands registered for different tenants and the defined tenant priorities. Preferably this mapping creation step 203 is executed only at start-up or upon changes in the configuration to accelerate processing of commands, thereby reducing the complexity and computing requirements of the overall process. In the preferred embodiment, the information specified in Tables 2 and 3, i.e., each tenant's admissible commands and the tenant priorities are fused to form a single structure for describing a command mapping as shown in Table 5.

**Table 5: Command mapping**

| Command mapping | | | |
|---|---|---|---|
| **Command ID** | **Registered tenants** | **Priority tenants** | **Parameter restrictions** |
| CR01 | T1, T2 | T1 | T1(0;1), T2(0;1) |
| CR02 | T1, T2 | <none> | Tl(-10 .. +10) |
| CR05 | T1, T2 | T2 | <none> |
| CR06 | T1 | ADMIN | <none> |
| CR10 | T1 | ADMIN, T1 | <none> |

In a next step 204 the interfaces I_{T1}, I_{T2} to the tenant environments are initialized according to parameters given in the interface mapping, Table 1.

After tenant interfaces have been initialized the multi-tenant module is ready to receive and (pre-)process commands from tenant interfaces in a step 205, commands can be received by the tenants.

Based on the received tenant commands and the command mapping of Table 5 an actuator command is then created in step 206, which is propagated to the actuator in step 207.

In an optional step 208 the state of the actuator is received and made available to the tenants' environments. Full multi-tenant support of an actuator may require a consistent state representation of the physical actuator. State information S provided by the comprising for example updates of command registers are received by the multi-tenant module. State synchronization may then be implemented towards the actuator (as explained in more detail below) and also towards the connected tenants. In an embodiment of the present invention a complete instance of all actuator commands/registers and the corresponding values and updates are stored at the multi-tenant module MTM. Thus, tenants can retrieve the updated values of registers immediately after one cycle of the process shown in Fig. 3.

Synchronization between an actuator and the multi-tenant module MTM can either be performed periodically or event driven (triggered by actuator internal register updates). In case the multi-tenant module MTM receives updates of register values directly from the actuator these updates are transparently loaded to the instance of actuator commands/registers.

Finally in a step 209 a check is performed to determine if the configuration (Tables 1-4) has changed. If a change in the configuration has occurred, for example a new tenant has been registered for access to the actuator, the process resumes execution at step 202 wherein the new configuration is read and a new command mapping is created in step 203.

If no change has occurred then computing-intensive steps 202-204 are omitted and the method returns to step 205.

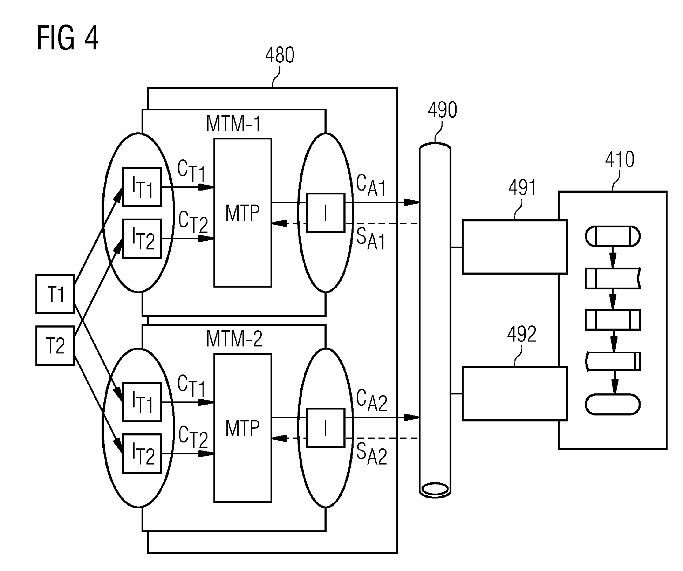

In embodiments the multi-tenant module may also be placed further away from the physical actuators and generally at any component of the network as will now be explained with reference to Fig. 4.

The system shown in Fig. 4 makes use of two multi-tenant actuator modules MTM-1, MTM-2 which both are constructed in accordance with the principles described above. In order to avoid unnecessary repetitions reference is therefore made to the detailed descriptions of Fig. 2 and 3 with regard to the multi-tenant actuator modules MTM-1, MTM-2.

The two multi-tenant actuator modules MTM-1, MTM-2 in the embodiment of Fig. 4 are software instances running on a dedicated or a shared processor of a network element 480 connected to or integrated in an industrial control network. Both multi-tenant actuator modules MTM-1 and MTM-2 are communicatively coupled to a network 490 via interfaces I. Two actuators 491 and 492 are also communicatively coupled to network 490 and the configuration of network 490 and its elements is such that first multi-tenant actuator module MTM-1 can communicate with first actuator 491 and that second multi-tenant actuator module MTM-2 can communicate with second actuator 492. Communication may be unidirectional but is preferably bidirectional in order to allow the transfer of actuator status information S_{A1}, S_{A2} from the actuators 491, 492 to the respective multi-tenant actuator module MTM-1, MTM-2.

A system constructed in accordance with Fig. 4 facilitates command flows aggregation at a defined location 480 inside the network. Each multi-tenant module MTM-1, MTM-2 represents an actuator for tenants T1, T2 and terminates tenant specific communication and may thus be considered a virtualization of the actuator it controls. In the example of Fig. 4 two tenants T1, T2 connecting via virtual actuators MTM-1, MTM2 and network 490 to two actuators 491, 492. The two virtual actuators MTM-1, MTM-2 create actuator commands C_{A1}, C_{A2} in accordance with the principles described with reference to Fig. 3. These actuator commands C_{A1}, C_{A2} are then transmitted via respective interfaces I of multi-tenant actuator modules MTM-1, MTM-2 to actuators 491, 492.

It should be noted that the instructions for implementing the processes, methods and/or techniques discussed herein may be provided on computer-readable storage media or memories, such as a cache, buffer, RAM, removable media, hard drive or other computer-readable storage media. Computer-readable storage media include various types of volatile and nonvolatile storage media. The functions, acts or tasks illustrated in the figures or described herein are executed in response to one or more sets of instructions stored in or on computer-readable storage media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing and the like. In one embodiment, the instructions are stored on a removable media device for reading by local or remote systems. In other embodiments, the instructions are stored in a remote location for transfer through a computer network or over telephone lines. In yet other embodiments, the instructions are stored within a given computer, CPU, GPU, or system.

It should also be noted that the terms "set of commands", "register", "parameter" and variations thereof are used interchangeably herein because whether there is only one command or parameter for example setting a specific register to a new value, a set of commands or parameters, or a command stream is simply a question of how a time window is chosen for the acquisition and processing of the commands or parameter(s), as is well known to those with skills in the art of digital signal processing. Consequently a set of commands or parameters may be empty or may comprise only one command or parameter value or it may comprise a large number of commands or parameters.

## Claims

1. Actuator module (MTM), comprising a connectivity module (CM), a processor (MTP) and an actuator interface (I),
the connectivity module (CM) comprising
a first tenant connector (I_{T1}) configured to
receive a first set of commands (c_{T1}) from a first tenant (T1) and provide said first set of commands to the processor;
at least one second tenant connector (I_{T2}) configured to
receive a at least one second set of commands (c_{T2}) from at least one second tenant (T2) and provide said second set of commands to the processor;
the processor (MTP) configured to
receive the first set of commands (c_{T1});
receive the at least one second set of commands (c_{T2}); generate a set of output commands (C) from the first and second sets of commands in accordance with a command mapping; and
provide said set of output commands (C) to at least one actuator via the actuator interface (I).

2. The actuator module of claim 1, wherein the processor (MTP) is further configured to receive actuator state information (S) from the at least one actuator.

3. The actuator module of claim 2, wherein the processor (MTP) is further configured to provide the actuator state information (S) via at least one tenant connector (I_{T1}), (I_{T2}) to at least one tenant (T1, T2).

4. The actuator module of claim 2, wherein the processor (MTP) is configured to generate the set of output commands (C) in accordance with the actuator state information (S).

5. The actuator module of any of the preceding claims, wherein the processor is configured to preprocess the command mapping to provide one set of output commands for each combination of valid first and second sets of commands based on first and second tenant priority values.

6. A system comprising:
at least one first actuator module according to any of claims 1 to 5; and
at least one second actuator module according to any of claims 1 to 5.

7. A control system comprising:
at least one actuator module (MTM) according to any of claims 1 to 5; and
at least one tenant control application configured to
receive sensor values;
generate a first set of control commands (c_{T1}) based on the sensor values; and
provide the first set of control commands to the at least one actuator module (MTM).

8. A method for generating a set of output commands (C), comprising:
generating a command mapping which maps each combination of valid first and second sets of commands to one set of output commands based on first and second tenant priority values;
receiving a first set of commands (c_{T1}) and at least one second least one second set of commands (c_{T2});
generating a set of output commands (C) from the first and second sets of commands in accordance with the command mapping; and
providing said set of output commands (C) to at least one actuator via an actuator interface (I).

9. The method of claim 8, wherein the set of output commands (C) is generated in accordance with actuator state information (S) received from the at least one actuator.

10. The method of claim 8 or 9, wherein the command mapping is preprocessed.
